# EUROPEAN PATENT SPECIFICATION

(11) **EP 3 351 995 B1**
(45) Date of publication and mention of the grant of the patent: **04.11.2020**
(21) Application number: 15903801.7
(22) Date of filing: 14.09.2015
(51) Int. Cl.: G02B 27/02, G02B 27/01

(54) **HEAD MOUNTED DISPLAY APPARATUS**
KOPFMONTIERTE ANZEIGEVORRICHTUNG
APPAREIL DE VISIOCASQUE

(43) Date of publication of application: 25.07.2018
(73) Proprietor: Shenzhen Royole Technologies Co., Ltd, Shenzhen, Guangdong 518052 (CN)
(72) Inventor: CHEN, Songya, Shenzhen Guangdong 518052 (CN); YANG, Songling, Shenzhen Guangdong 518052 (CN)
(74) Representative: Proi World Intellectual Property GmbH
(86) International application number: PCT/CN2015/089564
(87) International publication number: WO 2017/045110

(56) References cited:
- EP-A1- 3 280 153
- WO-A1-2007/119351
- CN-A- 103 596 099
- CN-A- 104 166 239
- CN-A- 104 280 881
- CN-A- 104 503 585
- CN-U- 204 229 050
- CN-U- 204 302 573
- CN-U- 204 575 970
- CN-U- 204 666 953
- JP-A- 2007 243 631
- US-A1- 2013 219 973
- US-A1- 2015 016 654

## Description

### FIELD

The present disclosure relates to wearable displays.

### BACKGROUND

Head-mounted display utilizes near-eye display method to enlarge images displayed on a micro display screen by a group of optical system (mainly composed of precise optical lenses), and further projects the enlarged images to retina of eyes, so as to show large images for users. Because the shape of the head-mounted display is similar to that of glasses, the head-mounted display is also called video glasses, which provides the product concept of a portable home theatre.

Portability of most of current head-mounted displays can be improved by connecting in-ear headphones via wires, so as to transform the concept of personal or portable home theatre into product. However, sound effect of the in-ear headphones is ordinary, head-mounted display assembled with earphone wire is inconvenient to carry, and the combination with the embedded headphone and head-mounted display make the size of the head-mounted display too big. Therefore, how to improve the portability of the head-mounted display becomes a problem need to be resolved.

EP3280153A1 discloses a head-mounted electronic device including a U-shaped head-mounted headphone, a U-shaped display module, a sensor module, and a control device, the control device is electrically connected to the sensor module and used for controlling the display module and/or the headphone to respond when the sensor module detects that the headphone state has switched between being worn and not being worn.

CN204575970U discloses a head-mounted display device including a head-mounted part and a display part, the head-mounted part is provided with a signal interface or a signal connector, the display part is provided with a matched signal interface or signal connector, and the display part is detachably connected to the head-mounted part through the matched signal interface or signal connector.

US2015016654A1 relates to an adjustable headset that includes an adjustable support band, a display system, a first and second ear cover, a computer system, a communications system, and a power source. The adjustable support band connects to each ear cover, with the ear covers being adjacent to a user's ears.

US2013219973A1 relates to a combination padlock with revolving cover having a baseplate having an upper side, a lower side, a front side, a keypad on the front side, and a pillar formed on the front side. A revolving cover of a basically same contour as the baseplate has a rear face contacting the front side of the baseplate, a front face, a round opening, and an arc groove defined in the rear face thereof. A central cap has a side wall received in the round opening of the revolving cover and fixed to the baseplate, and a peripheral covering and resting on the front face of the revolving cover.

The present invention is directed to a head-mounted display as defined in claim 1.

The head-mounted display in the present disclosure includes the connection mechanisms for connecting the display device, the headphone device and the head-mounted bracket. The connection mechanism includes a first rotation member for connecting a support arm at one end of the display device to one corresponding headphone body and a second rotation member rotatably connecting to the first rotation member; the second rotation connecting to the connection portion at one end of the head-mounted bracket. The display device and the head-mounted bracket are driven to rotate relative to each other under the first rotation member rotating relative to the second rotation member, which provides a flexible connection manner. Thus the display device and the head-mounted bracket can be folded together to carry around, which enhances portability of the product.

### BRIEF DESCRIPTION OF THE DRAWINGS

FIG. 1 is a schematic view of a head-mounted display provided by an exemplary embodiment of the present disclosure.
FIG. 2 is an exploded view of a connection mechanism of a head-mounted display provided by an exemplary embodiment of the present disclosure.
FIG. 3 is an assembled view of a first rotation member and a second rotation member in FIG. 2.
FIG. 4 is a partial enlarged view of a gear structure assembled in FIG. 3.
FIG. 5 is a schematic view of a second rotation member in FIG. 2.
FIG. 6 is a schematic view showing the connection between a head-mounted bracket and a cover provided by another embodiment.

### DETAILED DESCRIPTION

To better understand purposes, technical solutions, and advantages of the present disclosure, the following will further illustrate the present disclosure in combination with various embodiments and the accompanying drawings. It should be understood that the specific embodiments described herein are merely used to illustrate the present disclosure, and are not a limitation of the present disclosure.

In the description of the present disclosure, the "first", "second" are merely used for description, and cannot be understood to indicate or imply relative importance or implicitly indicate the number of the indicated technical features. Therefore, features with a limitation of "first" or "second" can explicitly or implicitly include one or more feature. In the description of the present disclosure, the term "a plurality of" means two or more than two, unless there is specific limitation.

In the description of the present disclosure, it should be noted that, unless explicitly stated or limited, the terms "mount", "connected" and "connection" should be broadly understood, for example, it may be a fixed connection, or may be a detachable connection, or integral connection; it may be a mechanical connection, or may be an electrical connection, or may be communication with each other; it may be directly connected, or may be indirectly connected via intermediary, or may be communication between interiors of two elements or interactions between two elements. Those skilled in the art can understand the specific definition of above terms in the present disclosure according to specific conditions.

The following disclosure provides many different embodiments or examples, for realize different structures of the present disclosure. In order to simplify the present disclosure, the following will describe components and setting of specific examples. Certainly, thereby are just examples, and are not intended to limit the present disclosure. Furthermore, in the present disclosure, reference numerals and/or reference letters may be repeated in different embodiments. This repetition is for the purpose of simplicity and clarity, and does not indicate relationships among various embodiments and/or settings discussed herein.

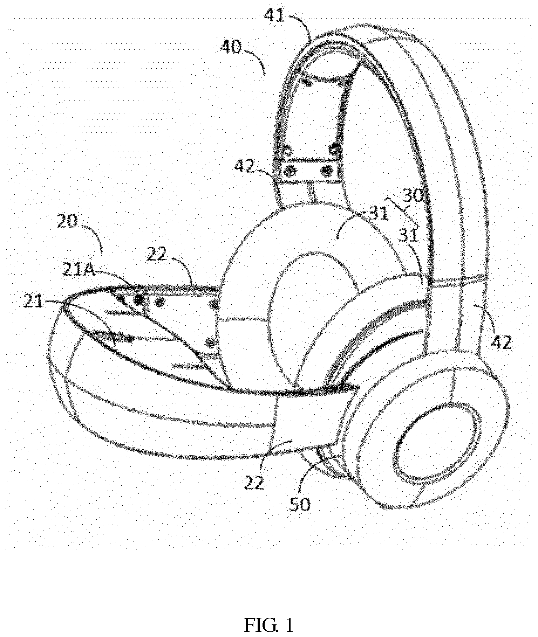

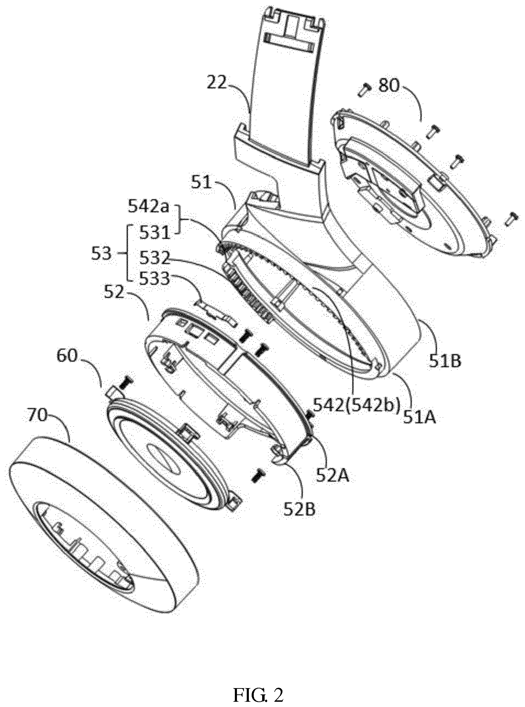

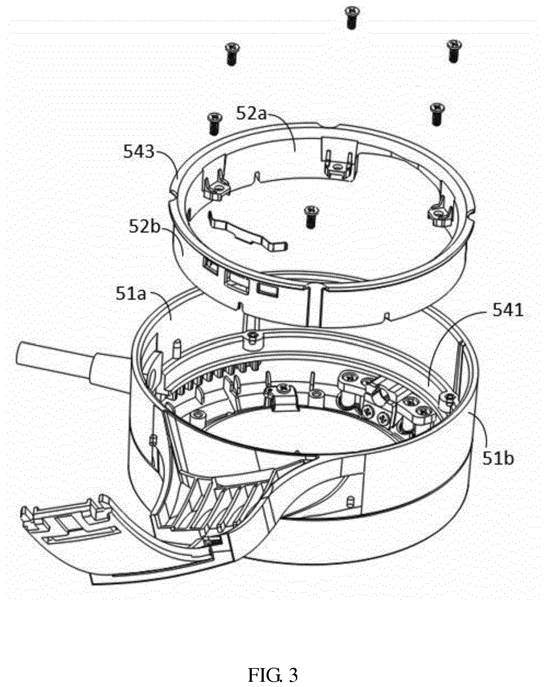

Referring to FIG. 1, a head-mounted display is provided in an embodiment of the present disclosure. The head-mounted display includes a display device 20, a headphone device 30, a head-mounted bracket 40, and a connection mechanism 50. The display device 20 includes a display body 21 with a displaying side 21A and support arms 22. The display side 21A is configured to project images to user eyes. The support arms 22 extend from two ends of the display body 21 in a direction A toward the displaying side 21A, which forms a shape similar to the shape of a pair of glasses. The headphone device 30 includes two headphone bodies 31 for outputting audio signals. The head-mounted bracket 40 includes a head-mounted portion 41 and connection portions 42 extending from two ends of the head-mounted portion 41. In the embodiment, the head-mounted display includes two connection mechanisms 50. Each of the two connection mechanisms 50 respectively connects one of the support arms 22 at two ends of the display body 21 to one corresponding headphone body 31 and one corresponding connection portion 42. Referring to FIGs. 2-4, each connection mechanism 50 includes a first rotation member 51 and a second rotation member 52. The first rotation member 51 connects one support arm 22 to the corresponding headphone body 31. The second rotation member 52 rotatably connects to the first rotation member 51, and further connects to the corresponding connection portion 42.

The above embodiment of the present disclosure provides a head-mounted display including the connection mechanism 50. The connection mechanism 50 can connect the display device 20, the headphone device 30, and the head-mounted bracket 40. The connection mechanism 50 includes the first rotation member 51 for connecting the support arm 22 at one end to one corresponding headphone body 31, and the second rotation member 52 rotatably connecting to the first rotation member 51, and the second rotation member 52 further connects to the connection portion 42 at one end of the head-mounted bracket 40. The display device 20 and the head-mounted bracket 40 are driven to rotate relative to each other when the first rotation member 51 rotates relative around the second rotation member 52, which provides a flexible connection manner, thus the display device 20 and the head-mounted bracket 40 can be folded together to carry around, which enhances portability of the product.

In the embodiment, at least one of the two connection mechanisms 50 includes a gear structure 53. The gear structure 53 includes a tooth-shaped structure 532. The tooth-shaped structure 532 is arranged at a circumferential wall 531 of the first rotation member 51 or that of the second member 52, and a resilient sheet 533 fixes to another one of the first rotation member 51 and the second rotation member 52 and engages with the tooth-shaped structure 532. The first rotation member 51 and the second rotation member 52 rotatably engage with each other through the tooth-shaped structure 532 and the resilient sheet 533 under an external force. With the engagement between the tooth-shaped structure 532 and the resilient sheet 533, the head-mounted bracket 40 keeps a relative angle with the display device 20. The resilient sheet 533 is deformed by an external force and slides relative to the tooth-shaped structure 532, which enables the display device 20 to rotate around an axis extending through the axle centers of the two headphone bodies 31. It should be noted that, only one of the connection mechanisms 50 supporting the gear structure 53, or both of the two connection mechanisms 50 supporting the gear structures 53, which ensure that the head-mounted bracket 40 keep a relative angle with the display device 20.

In some cases, when both of the two connection mechanisms 50 include the gear structures 53, if the user exert an improper force, for example, when the display device 20 and the head-mounted bracket 40 are pulled toward one of the connection mechanisms 50, the forces applied to the two gear structures 53 are different and then the rotations of the two gear structures 53 are not consistent. Thus the head-mounted display may be broke down easily. This problem can be solved with only one of the connection mechanisms 50 with the gear structure 53, and the gear structure 53 set in only one of the connection mechanisms 50 drives the other connection mechanism 50 to rotate together with the one of the connection mechanisms 50.

The above embodiment of the present disclosure includes the connection mechanism 50 for connecting the display device 20, the headphone device 30, and the head-mounted bracket 40. The connection mechanism 50 includes the gear structure 53 with the tooth-shaped structure 532 and the resilient sheet 533. Under an external fore, the connection mechanism 50 drives the display device 20 to rotate relative to the head-mounted bracket 40 by virtue of the rotation of the tooth-shaped structure 532 and the engaged resilient sheet 533, which provides a flexible connection manner to allow the display device 20 to be folded together with the head-mounted bracket 40, to enhance the portability of the product.

Specifically, the first rotation member 51 includes a latching side 51A with a latching structure 54, and an opposite side 51B opposite to the latching side 51A. The second rotation member 52 includes a latching side 52A also with a latching structure 54 and an opposite side 52B opposite to the latching side 52A. The gear structure 53 is arranged at the latching sides 51A, 52A. In an embodiment, each of the first rotation member 51 and the second rotation member 52 is an annular frame, and includes an inner circumferential wall 51a or 52a and an outer circumferential wall 51b or 52b. The annulus radius of the first rotation member 51 is larger or smaller than that of the second rotation member 52. In an embodiment, the radius of the annulus of the first rotation member 51 is greater than that of the second rotation member 52. In the embodiment, the latching structure 54 of the first rotation member 51 includes a first joint portion 541 extending from the latching side 51A toward the center of the annulus, and a second joint portion 542 extending from the first joint portion 541 in a direction opposite to the opposite side 51B. Specifically, the second joint portion 542 can provide with the circumferential wall 531 and the tooth-shaped structure 532 of the gear structure 53. The latching structure 54 of the second rotation member 52 includes a third joint portion 543. The third joint portion 543 extends from the latching side 52A away from the center of the annulus. The first joint portion 541 fits with the third joint portion 543. Thus, the third joint portion 543 can be pressed to connect with the first joint portion 541 through the inner of the first rotation member 51, and the opposite side 52B extends out through the first rotating member 51, which enables the first rotation member 51 to rotatably engage with the second rotation member 52. The structure of another connection mechanism 50 is almost the same as the above, the difference between the two connection mechanisms 50 is that the resilient sheet 533 is not arranged in the another connection mechanism 50, or neither the mentioned resilient sheet 533 nor the tooth-shaped structure 532 are not arranged in the another connection mechanism 50. However, the present disclosure is not limited thereto, the radius of the annulus of the first rotation member 51 may be smaller than that of the second rotation member 52, and in which case, the latching structure 54 of the first rotation member 51 and the latching structure 54 of the second rotation member 52 in the above embodiment are exchanged correspondingly.

For purpose of illustrating the above principle, the following in combination with an embodiment is for specifically illustration. In the embodiment, the radius of the annulus of the first rotation member 51 is greater than that of the second rotation member 52. However, the present disclosure is not limited thereto.

The second joint portion 542 of the first rotation member 51 is a concentric annular ring extending from the annular frame, and includes an inner circumferential wall 542a and an outer circumferential wall 542b. In the embodiment, the circumferential wall 531 and the tooth-shaped structure 532 of the gear structure 53 are arranged at the second joint portion 542. Specifically, the tooth-shaped structure 532 is arranged at the inner circumferential wall 542a. It should be understood that the inner circumferential wall 542a can act as the circumferential wall 531 of the gear structure 53. The resilient sheet 533 of the gear structure 53 is fixed to the second rotation member 52. When the third joint portion 543 of the second rotation member 52 is pressed to connect with the first joint portion 541 by the inner portion of the first rotation member 51, the resilient sheet 533 engages with the tooth-shaped structure 532 correspondingly.

Specifically, in the embodiment, a resilient sheet fixing portion 521 is arranged at the annular frame of the second rotation member 52. The resilient sheet fixing portion 521 is located at a position corresponding to the tooth-shaped structure 532 when the second rotation member 52 engages with the first rotation member 51. Specifically, in the embodiment, the resilient sheet fixing portion 521 is a limiting through hole with a shape corresponding to the shape of the resilient sheet 533. Part of the resilient sheet 533 is limited and fixed to the inner side of the second rotation member 52. Part of the resilient sheet 533 for engagement extends out through the limiting through hole and corresponds to the tooth-shaped structure 532. Preferably, in the embodiment, the second rotation member 52 includes two resilient sheet fixing portions 521. The resilient sheet 533 includes two portions which extend outside the fixing portions 521 and engage with the tooth-shaped structure 532. When one of the two portions is located in a gap between two adjacent teeth of the tooth-shaped structure 532, another portion stands against the tooth of the tooth-shaped structure 532. Therefore, the accuracy of a rotation location can achieve to a half of the teeth pitch of the tooth-shaped structure 532.

In a preferred embodiment of the present disclosure, the first rotation member 51 and the second rotation member 52 utilize annular frames and connect to each other by utilizing the latching structure 54, thus to form an accommodating chamber by the annular frame. The accommodating chamber can accommodate electric components, such as PCB, batteries, or the like, which avoids the head-mounted display supplying a redundant structure for allocating additional accommodate space. Preferably, an outer cover with a latching structure can be arranged at the outer side of the accommodating chamber formed by the annular frames, which can be easily disassembled. Thus the components are allowed to be replaced, maintained, repaired, or the like easily.

However, as long as that the resilient sheet 533 is rotatable relative to the tooth-shaped structure 532 and keeps engaging with the tooth-shaped structure 532, the first rotation member 51 and the second rotation member 52 in the present disclosure are not limited to the annular frames. For example, one of the first rotation member 51 and the second rotation ember 52 provides the tooth-shaped structure 532 and is a frame with an outer rectangle wall and an inner circular wall, and the tooth-shaped structure is mounted to the inner circular wall. Accordingly, another of the first rotation member 51 and the second rotation member 52 can be an embedded annular frame of the above embodiment, and can be a circular solid embedded in the circular cavity formed by the circular wall of the one of the first rotation member 51 and the second rotation member which provides the tooth-shaped structure 532, and the resilient sheet 533 is arranged at the circular outer wall of the circular solid and engages the tooth-shaped structure 532 correspondingly. It should be understood that, one of the first rotation member 51 and the second rotation member 52 which provides the tooth-shaped structure 532 may be an annular frame with a smaller radius, with the tooth-shaped structure 532 arranged at the outer circumferential wall of the annular frame. Another of the first rotation member 51 and the second rotation member 52 which provides the resilient sheet 533 can be of any shape with an inner circumferential wall corresponding to the outer circumferential wall of the one of the first rotation member 51 and the second rotation member 52, which enables the tooth-shaped structure 532 to be embedded in the inner circumferential wall. The resilient sheet 533 engages with the tooth-shaped structure 532 of the embedded one of the first rotation member 51 and the second rotation member 52 which provides the tooth-shaped structure 532 through the inner circumferential wall. An ordinary person skilled in the art constructs the relative engagement rotation of the first rotation member and the second rotation member according to the principles of the present disclosure should be included in the scope of the present disclosure.

In the embodiment, the opposite side 51B of the first rotation member 51 connects to the corresponding headphone body 31. Specifically, the headphone body 31 connects to the first rotation member 51 by the fixing member 80. The fixing member 80 fixedly connects to the opposite side 51B of the first rotation member 51, and the headphone body 31 is fixed to the fixing member 80. The specific fixing manner can be riveted joint, and also can be any fixing manner provided by the art.

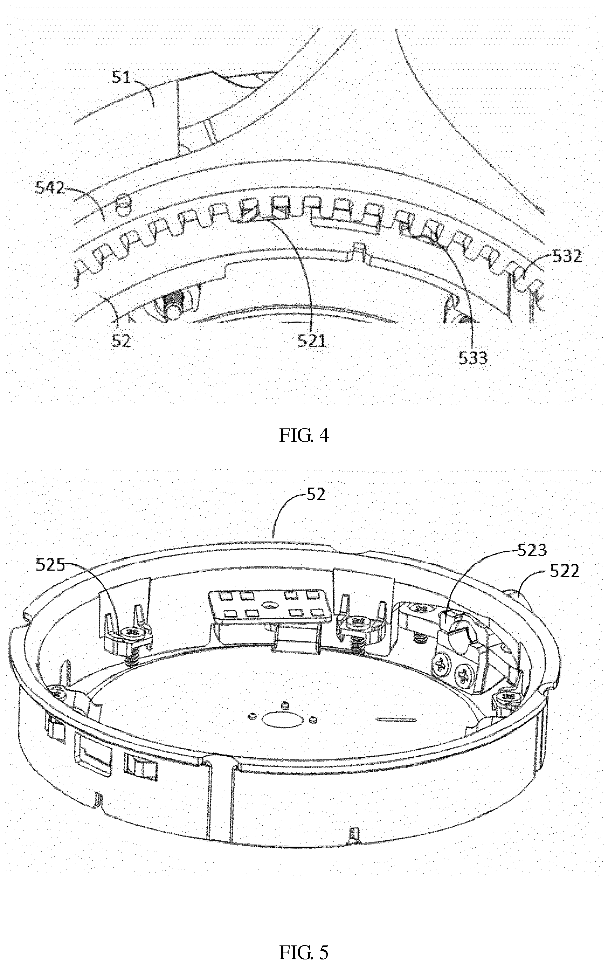

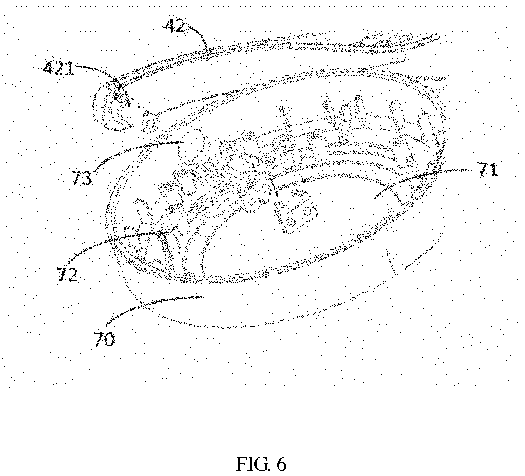

Preferably, the head-mounted display 10 further includes a touch panel 60. The touch panel 60 is arranged at the opposite side 52B of the second rotation member 52. Specifically, referring to FIG. 6, the head-mounted display 10 may further include a cover 70. The cover 70 includes an opening portion 71 and a fixing portion 72. The touch panel 60 is fixed to the cover 70 and is exposed through the opening portion 71. The fixing portion 72 fixedly connects to the second rotation member 52. Specifically, as another embodiment of the head-mounted bracket 40 and the connection mechanism 50 shown in FIG. 5, the second rotation member 52 includes a fixed connection portion 525. Specifically, the fixed connection portion 525 is a rivet fixing hole, and the fixed connection portion 525 fixedly connects to the fixing portion 72 of the cover by rivets. In this embodiment, the connection end 42 of the head-mounted bracket 40 pivotally connects to the cover 70 via a pivot 421. The cover 70 includes a pivot hole 73, which enables the pivot 421 of the connection end 42 to extend through the pivot hole 73 to be fixed in the cover 70.

In another embodiment, there is no cover 70 arranged on the head-mounted display 10, the connection end 42 of the head bracket 40 pivotally connects to the second rotation member 52 via a pivot. Specifically, referring to FIG. 6, the second rotation member 52 includes a pivot hole 522, which enables the pivot 421 of the connection end 42 to extend through the pivot hole 522 from the outer side of the second rotation member 52, and the connection end is further fixed to the inner side of the second rotation member 52 by a sleeve 523.

However, the connection manner between the connection end 42 of the head-mounted bracket 40 and the connection mechanism 50 is not limited to the above specific embodiment. Referring to FIG. 1, the connection end 42 of the head-mounted bracket 40 can be integrally fixedly formed in the second rotation member 52 or the cover 70, and it can also connects to the second rotation member 52 or the cover 70 by an inserting manner, latching manner, or the like.

In the above preferable embodiment, the head-mounted display achieves rotatable connection by virtue of the latching structures 54 of the first rotation member 51 and the second rotation member 52 of the connection mechanism 50. The head-mounted bracket 40 connects to the second rotation member 52, the support arms 22 of the display device 20 connect to the first rotation member 51, which enables the display device 20 and the head-mounted bracket 40 to rotate relative to each other under rotation of the first rotation member 51 and the second rotation member 52. The connection includes a direct connection, or an indirect connection via other component.

In the above embodiment, the gear structure 53 enables the first rotation member 51 and the second rotation member 52 to rotate relative to each other under damping, such that an angle can be defined between the head-mounted portion 41 and the display body 21, and the head-mounted portion 41 and the display body 21 are rotatable relative to each other. It could be understood that structures which achieves the above function is not limited to the gear structure 53 of the present disclosure. For example, the structures may be two rubbers, as long as damping structures which cause the first rotation member 51 and the second rotation member 52 to rotate relative to each other under damping.

The foregoing description is only the preferred embodiments of the present disclosure, but is not intended to limit the scope of the invention.

## Claims

1. A head-mounted display, comprising:
a display device (20) comprising one display body (21) and two support arms (22) extending from two opposite ends of the display body (21) respectively;
a headphone device (30) comprising two headphone bodies (31) for outputting an audio signal;
a head-mounted bracket (40) comprising a head-mounted portion (41) and two connection portions (42) extending from two ends of the head-mounted portion (41) respectively; and
two connection mechanisms (50) connecting each support arm (22) to one corresponding headphone body (31) and one corresponding connection portion (41), wherein each connection mechanism (50) comprises a first rotation member (51) and a second rotation member (52), the first rotation member (51) connects each support arm (22) and the corresponding headphone body (31), the second rotation member (52) rotatably connects the first rotation member (51) to the corresponding connection portion (41);
wherein one of the first rotation member (51) and the second rotation member (52) comprises a circumferential wall with a tooth-shaped structure (532), the other one of the first rotation member (51) and the second rotation member (52) comprises a resilient sheet (533) engaging with the tooth-shaped structure (532), and the first rotation member (51) and the second rotation member (52) rotate relative to each other by engaging the tooth-shaped structure (532) with the resilient sheet (533) under an external force;
**characterized in that**, the one of the first rotation member (51) and the second rotation member (52) comprising the resilient sheet (533) further comprises two resilient sheet fixing portions (521), the resilient sheet (533) comprises two portions extending outside the resilient sheet fixing portions (521) and engaging with the tooth-shaped structure (532), and one of the two portions is located at a gap between two adjacent teeth of the tooth-shaped structure (532), the other portion is pressed to connect with a tooth of the tooth-shaped structure (532).

2. The head-mounted display according to claim 1, **characterized in that** each of the first rotation member (51) and the second rotation member (52) comprises a latching side with a limiting structure (54) and an opposite side opposite to the latching side; the tooth-shaped structure (532) and the resilient sheet (533) engaging with the tooth-shaped structure (532) are respectively arranged at one of the latching sides.

3. The head-mounted display according to claim 2, **characterized in that** each of the first rotation member (51) and the second rotation member (52) is an annular frame comprising an inner circumferential wall and an outer circumferential wall.

4. The head-mounted display according to claim 3, **characterized in that** the limiting structure (54) on one of the first rotation member (51) and the second rotation member (52) with a greater annulus radius comprises a first joint portion (541) extending from the latching side toward a center of the annulus, and a second joint portion (542) extending from the first joint portion (541) to a direction opposite to the opposite side, and the limiting structure (54) on the other one of the first rotation member (51) and the second rotation member (52) with a smaller annulus comprises a third joint portion (543) extending from the latching side to a direction opposite to the center of the annulus, the first joint portion (541) attaches to the third joint portion (543).

5. The head-mounted display according to claim 4, **characterized in that** the radius of the annulus of the first rotation member (51) is greater than that of the second rotation member (52).

6. The head-mounted display according to claim 5, **characterized in that** the second joint portion (542) of the first rotation member (51) comprises a concentric annular ring extending from the annular frame, the concentric annular ring comprises an inner circumferential wall and an outer circumferential wall; the tooth-shaped structure (532) is arranged on the inner circumferential wall of the concentric annular ring; the resilient sheet (533) is fixed to the second rotation member (52), and the resilient sheet (533) engages with the tooth-shaped structure (532) in position when the third joint portion (543) of the second rotation member (52) is pressed to connect with the first joint portion (541) by an interior side of the first rotation member (51).

7. The head-mounted display according to any one of claims 2 to 6, **characterized in that** the headphone body (31) connects to the opposite side of the first rotation member (51).

8. The head-mounted display according to any one of claims 2 to 7, **characterized by** further comprising a touch panel, wherein the touch panel is arranged on the opposite side of the second rotation member (52).

9. The head-mounted display according to claim 8, **characterized by** further comprising a cover (70), wherein the cover (70) comprises an opening portion (71) and a fixing portion (72), the touch panel is fixed to the cover (70) and exposed through the opening portion (71); the fixing portion (72) fixedly connects to the second rotation member (52).

10. The head-mounted display according to claim 9, **characterized in that** a connection end of the head-mounted bracket (40) rotatably connects to the cover (70) via a pivot.

11. The head-mounted display according to any one of claims 1 to 8, **characterized in that** a connection end of the head-mounted bracket (40) rotatably connects to the second rotation member (52) via a pivot.

12. The head-mounted display according to claim 11, **characterized in that** the second rotation member (52) defines a pivot hole (522), the pivot (421) extends through the pivot hole (522) from an outer side of the second rotation member (52), and the connection end is fixed to an inner side of the second rotation member (52) by a sleeve (523).

## Patentansprüche

1. Kopfmontierte Anzeige, umfassend:
eine Anzeigevorrichtung (20) mit einem Anzeigekörper (21) und zwei Haltearmen (22), die sich jeweils von zwei gegenüberliegenden Enden des Anzeigekörpers (21) aus erstrecken;
eine Kopfhörervorrichtung (30) mit zwei Kopfhörerkörpern (31) zum Ausgeben eines Audiosignals;
eine am Kopf montierte Halterung (40) mit einem am Kopf montierten Abschnitt (41) und zwei Verbindungsabschnitten (42), die sich jeweils von zwei Enden des am Kopf montierten Abschnitts (41) erstrecken; und
zwei Verbindungsvorrichtungen (50), die jeden Tragarm (22) mit einem entsprechenden Kopfhörerkörper (31) und einem entsprechenden Verbindungsabschnitt (41) verbinden, wobei jede Verbindungsvorrichtung (50) ein erstes Rotationselement (51) und ein zweites Rotationselement (52) aufweist, das erste Rotationselement (51) jeden Tragarm (22) und den entsprechenden Kopfhörerkörper (31) verbindet, das zweite Rotationselement (52) das erste Rotationselement (51) drehbar mit dem entsprechenden Verbindungsabschnitt (41) verbindet;
wobei eines von dem ersten Rotationselement (51) und dem zweiten Rotationselement (52) eine Umfangswand mit einer zahnförmigen Struktur (532) aufweist, wobei das andere von den ersten Rotationselement (51) und von dem zweiten Rotationselement (52) eine elastische Platte (533) aufweist, die mit der zahnförmigen Struktur (532) in Eingriff steht, und das erste Rotationselement (51) und das zweite Rotationselement (52) sich relativ zueinander drehen, indem die zahnförmige Struktur (532) mit der elastischen Platte (533) unter Einwirkung einer äußeren Kraft in Eingriff gebracht wird,
**dadurch gekennzeichnet, dass**
das eine von dem ersten Rotationselement (51) und dem zweiten Rotationselement (52), das die elastische Platte (533) umfasst, ferner zwei elastische Plattenbefestigungsteile (521) umfasst, die elastische Platte (533) zwei Abschnitte umfasst, die sich außerhalb der elastischen Plattenbefestigungsteile (521) erstrecken und mit der zahnförmigen Struktur (532) in Eingriff stehen, und einer der beiden Abschnitte an einer Lücke zwischen zwei benachbarten Zähnen der zahnförmigen Struktur (532) angeordnet ist, wobei der andere Abschnitt gedrückt wird, um mit einem Zahn der zahnförmigen Struktur (532) verbunden zu werden.

2. Kopfmontierte Anzeige nach Anspruch 1, **dadurch gekennzeichnet, dass** sowohl das erste Rotationselement (51) als auch das zweite Rotationselement (52) eine Einrastseite mit einer Begrenzungsstruktur (54) und eine der Einrastseite gegenüberliegende Seite umfasst; die zahnförmige Struktur (532) und die elastische Folie (533), die mit der zahnförmigen Struktur (532) in Eingriff steht, sind jeweils an einer der Einrastseiten angeordnet.

3. Kopfmontierte Anzeige nach Anspruch 2, **dadurch gekennzeichnet, dass** sowohl das erste Rotationselement (51) als auch das zweite Rotationselement (52) ein ringförmiger Rahmen ist, der eine innere Umfangswand und eine äußere Umfangswand umfasst.

4. Kopfmontierte Anzeige nach Anspruch 3, **dadurch gekennzeichnet, dass** die Begrenzungsstruktur (54) auf einem von dem ersten Rotationselement (51) und dem zweiten Rotationselement (52) mit einem größeren Ringradius einen ersten Verbindungsabschnitt (541), der sich von der Einrastseite zu einem Zentrum des Rings erstreckt, und einen zweiten Verbindungsabschnitt (542) umfasst, der sich von dem ersten Verbindungsabschnitt (541) in eine Richtung entgegengesetzt zu der gegenüberliegenden Seite erstreckt, und die Begrenzungsstruktur (54) auf dem anderen des ersten Rotationselements (51) und des zweiten Rotationselements (52) mit einem kleineren Ring einen dritten Verbindungsabschnitt (543) umfasst, der sich von der Einrastseite in eine Richtung entgegengesetzt zur Mitte des Rings erstreckt, wobei der erste Verbindungsabschnitt (541) an dem dritten Verbindungsabschnitt (543) befestigt ist.

5. Kopfmontierte Anzeige nach Anspruch 4, **dadurch gekennzeichnet, dass** der Radius des Ringes des ersten Rotationselements (51) größer als der des zweiten Rotationselements (52) ist.

6. Kopfmontierte Anzeige nach Anspruch 5, **dadurch gekennzeichnet, dass** der zweite Verbindungsabschnitt (542) des ersten Rotationselements (51) einen konzentrischen ringförmigen Ring umfasst, der sich von dem ringförmigen Rahmen erstreckt, wobei der konzentrische ringförmige Ring eine innere Umfangswand und eine äußere Umfangswand umfasst; die zahnförmige Struktur (532) an der inneren Umfangswand des konzentrischen ringförmigen Rings angeordnet ist; die elastische Platte (533) an dem zweiten Rotationselement (52) befestigt ist, und die elastische Platte (533) mit der zahnförmigen Struktur (532) in Position eingreift, wenn der dritte Verbindungsabschnitt (543) des zweiten Rotationselements (52) durch eine Innenseite des ersten Rotationselements (51) zur Verbindung mit dem ersten Verbindungsabschnitt (541) gedrückt wird.

7. Kopfmontierte Anzeige nach einem der Ansprüche 2 bis 6, **dadurch gekennzeichnet, dass** der Kopfhörerkörper (31) mit der gegenüberliegenden Seite des ersten Rotationselements (51) verbunden ist.

8. Kopfmontierte Anzeige nach einem der Ansprüche 2 bis 7, **dadurch gekennzeichnet, dass** sie ferner ein Berührungspaneel umfasst, wobei das Berührungspaneel auf der gegenüberliegenden Seite des zweiten Rotationselements (52) angeordnet ist.

9. Kopfmontierte Anzeige nach Anspruch 8, **dadurch gekennzeichnet, dass** sie ferner eine Abdeckung (70) umfasst, wobei die Abdeckung (70) einen Öffnungsabschnitt (71) und einen Befestigungsabschnitt (72) umfasst, wobei das Berührungsfeld an der Abdeckung (70) befestigt ist und durch den Öffnungsabschnitt (71) freiliegt; der Befestigungsabschnitt (72) ist fest mit dem zweiten Rotationselement (52) verbunden.

10. Kopfmontierte Anzeige nach Anspruch 9, **dadurch gekennzeichnet, dass** ein Verbindungsende des kopfmontierten Trägers (40) über ein Drehgelenk drehbar mit der Abdeckung (70) verbunden ist.

11. Kopfmontierte Anzeige nach einem der Ansprüche 1 bis 8, **dadurch gekennzeichnet, dass** ein Verbindungsende des am Kopf montierten Trägers (40) drehbar mit dem zweiten Rotationselement (52) über ein Drehgelenk verbunden ist.

12. Kopfmontierte Anzeige nach Anspruch 11, **dadurch gekennzeichnet, dass** das zweite Rotationselement (52) ein Schwenkloch (522) definiert, der Schwenkzapfen (421) sich durch das Schwenkloch (522) von einer Außenseite des zweiten Rotationselements (52) aus erstreckt und das Verbindungsende über eine Hülse (523) mit einer Innenseite des zweiten Rotationselements (52) verbunden ist.

## Revendications

1. Affichage monté à l'avant, comprenant :
un dispositif d'affichage (20) comprenant un corps d'affichage (21) et deux bras de support (22) s'étendant respectivement à partir de deux extrémités opposées du corps d'affichage (21) ;
un dispositif d'écouteur (30) comprenant deux corps d'écouteur (31) pour la sortie d'un signal audio ;
un support de tête (40) comprenant une partie de tête (41) et deux parties de connexion (42) s'étendant respectivement à partir de deux extrémités de la partie de tête (41) ; et
deux mécanismes de connexion (50) reliant chaque bras de support (22) à un corps de casque correspondant (31) et à une partie de connexion correspondante (41), dans lequel chaque mécanisme de connexion (50) comprend un premier élément de rotation (51) et un second élément de rotation (52), le premier élément de rotation (51) relie chaque bras de support (22) et le corps de casque correspondant (31), le second élément de rotation (52) relie de manière rotative le premier élément de rotation (51) à la partie de connexion correspondante (41);
dans lequel l'un des éléments de rotation first (51) et le second élément de rotation (52) comprend une paroi circonférentielle avec une structure en forme de dent (532), l'autre élément de rotation first (51) et le second élément de rotation (52) comprend une feuille élastique (533) s'engageant avec la structure en forme de dent (532), et l'élément de rotation first (51) et le second élément de rotation (52) tournent l'un par rapport à l'autre en engageant la structure en forme de dent (532) avec la feuille élastique (533) sous une force externe;
**caractérisé en ce que**, l'un de l'élément de rotation first (51) et du second élément de rotation (52) comprenant la feuille élastique (533) comprend en outre deux parties (521) de la feuille élastique fixing, la feuille élastique (533) comprend deux parties s'étendant à l'extérieur des parties (521) de la feuille élastique fixing et s'engageant avec la structure en forme de dent (532), et l'une des deux parties est située à un espace entre deux dents adjacentes de la structure en forme de dent (532), l'autre partie est pressée pour se connecter à une dent de la structure en forme de dent (532).

2. L'affichage monté sur la tête selon la revendication 1, **caractérisé en ce que** chacun des éléments de rotation first (51) et le deuxième élément de rotation (52) comprend un côté de verrouillage avec une structure de limitation (54) et un côté opposé au côté de verrouillage ; la structure en forme de dent (532) et la feuille élastique (533) s'engageant avec la structure en forme de dent (532) sont respectivement disposées sur l'un des côtés de verrouillage.

3. L'affichage monté sur la tête selon la revendication 2, **caractérisé en ce que** chacun des éléments de rotation first (51) et le deuxième élément de rotation (52) est un cadre annulaire comprenant une paroi circonférentielle intérieure et une paroi circonférentielle extérieure.

4. L'affichage monté sur la tête selon la revendication 3, **caractérisé en ce que** la structure de limitation (54) sur l'un des éléments de rotation first (51) et le second élément de rotation (52) avec un rayon d'anneau plus grand comprend une partie de joint first (541) s'étendant du côté de verrouillage vers un centre de l'anneau, et une seconde partie de joint (542) s'étendant de la partie de joint first (541) vers une direction opposée au côté opposé, et la structure de limitation (54) sur l'autre de l'élément de rotation first (51) et le deuxième élément de rotation (52) avec un anneau plus petit comprend une troisième partie d'articulation (543) s'étendant du côté de verrouillage à une direction opposée au centre de l'anneau, la partie d'articulation first (541) s'attache à la troisième partie d'articulation (543).

5. L'affichage monté sur la tête selon la revendication 4, **caractérisé en ce que** le rayon de l'anneau de l'élément de rotation first (51) est supérieur à celui du deuxième élément de rotation (52).

6. L'affichage monté sur la tête selon la revendication 5, **caractérisé en ce que** la deuxième partie d'articulation (542) de l'élément de rotation first (51) comprend une bague annulaire concentrique s'étendant depuis le cadre annulaire, la bague annulaire concentrique comprend une paroi circonférentielle intérieure et une paroi circonférentielle extérieure ; la structure en forme de dent (532) est disposée sur la paroi circonférentielle intérieure de la bague annulaire concentrique ; la feuille élastique (533) est fixée au deuxième élément de rotation (52), et la feuille élastique (533) s'engage avec la structure en forme de dent (532) en position lorsque la troisième partie de joint (543) du deuxième élément de rotation (52) est pressée pour se connecter à la partie de joint first (541) par un côté intérieur de l'élément de rotation first (51).

7. L'affichage monté sur la tête selon l'une quelconque des revendications 2 à 6, **caractérisé en ce que** le corps du casque (31) se connecte au côté opposé de l'élément de rotation first (51).

8. L'affichage monté sur la tête selon l'une quelconque des revendications 2 à 7, **caractérisé en ce qu'**il comprend en outre un écran tactile, dans lequel l'écran tactile est disposé sur le côté opposé du second élément de rotation (52).

9. L'affichage monté sur la tête selon la revendication 8, **caractérisé en ce qu'**il comprend en outre un couvercle (70), dans lequel le couvercle (70) comprend une partie d'ouverture (71) et une partie fixing (72), l'écran tactile est fixed au couvercle (70) et exposé à travers la partie d'ouverture (71) ; la partie fixing (72) fixedly se connecte au second élément de rotation (52).

10. L'affichage monté sur la tête selon la revendication 9, **caractérisé en ce qu'**une extrémité de connexion du support monté sur la tête (40) se connecte de manière rotative au couvercle (70) via un pivot.

11. L'affichage monté sur la tête selon l'une quelconque des revendications 1 à 8, **caractérisé en ce qu'**une extrémité de connexion du support monté sur la tête (40) est connectée de manière rotative au second élément de rotation (52) par l'intermédiaire d'un pivot.

12. L'affichage monté sur la tête selon la revendication 11, **caractérisé en ce que** le second élément de rotation (52) defines un trou de pivot (522), le pivot (421) s'étend à travers le trou de pivot (522) depuis un côté extérieur du second élément de rotation (52), et l'extrémité de connexion est fixed à un côté intérieur du second élément de rotation (52) par un manchon (523).
